# EUROPEAN PATENT APPLICATION

(11) **EP 4 482 187 A1**
(43) Date of publication of application: **25.12.2024**
(21) Application number: 23315253.7
(22) Date of filing: 20.06.2023
(51) Int. Cl.: H04W 12/40, H04W 12/30

(54) **DYNAMIC SET-UP AND ENROLMENT OF A LOGICAL SECURE ELEMENT**

(71) Applicant: THALES DIS FRANCE SAS, 92190 Meudon (FR)
(72) Inventor: Praca, Denis, 13080 LUYNES (FR)
(74) Representative: Thomas, Christine Marie Catherine

(57) **Abstract**

The present invention relates to a physical secure element installed in a communication device, said physical secure element having an operating system having a supervisor adapted to create various execution environments, said supervisor being further configured to:
- receive, from a specific application enrolment server managing a key ecosystem dedicated to the specific application, a command to create a Logical Secure Element, said command comprising enrolment data comprising at least a type of Logical Secure Element to be created for the specific application and a set of keys to be used for subsequent remote provisioning in relation with the Logical Secure Element to be created,
- create a Logical Secure Element of the type requested in the command as an execution environment onboard the secure element.

## Description

### FIELD OF THE INVENTION

This invention is related to physical embedded secure elements and thus in particular eSIM, eSE business for supporting mobile telecommunications and digital identity. More particularly, the invention relates to the set-up of Logical Secure Elements on-field. The invention also pertains to a corresponding set-up method.

### BACKGROUND OF THE INVENTION

According ETSI SET specifications defined since July 2022, a communication terminal can access multiple Logical Secure Elements in a single physical UICC using a multiplexing of the physical interface. A Multiple Logical Interface has thus been defined and ETSI SET has recently standardized this concept of Multiple Logical Interfaces (MLIs) being able to address multiple Logical Secure Elements (LSEs).

Similar standardization is ongoing in ISO/IEC with the name Logical Security Device (LSD). The first use of this technology is the deployment of eSIMs able to have multiple Profiles enabled at the same time, allowing the mobile phone to register to several independent mobile networks. This technology will be soon extended by the concept of Secure Applications for Mobiles (SAM), currently standardized by GSMA and GlobalPlatform.

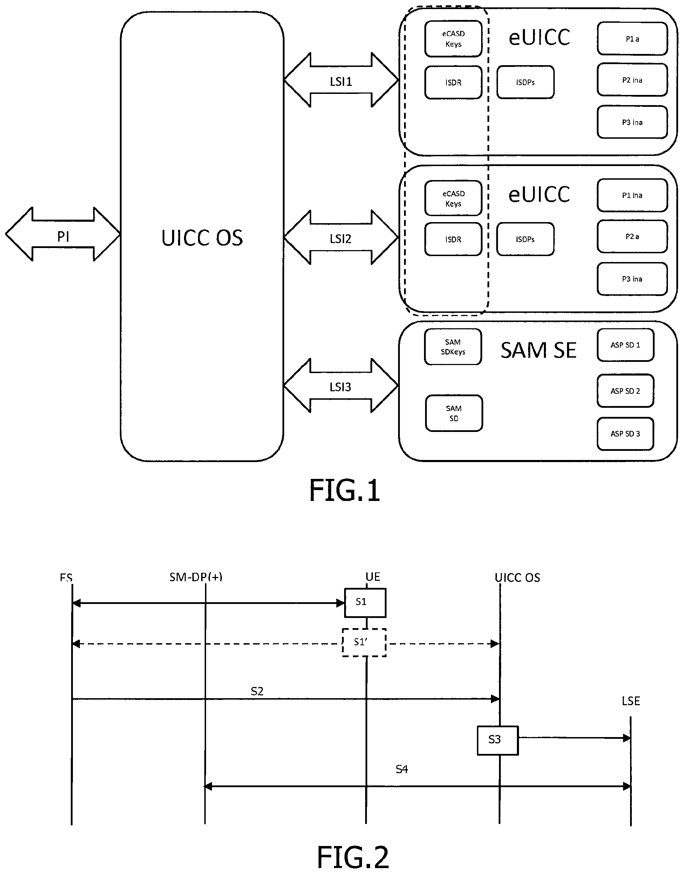

Figure 1 illustrates this technology where an operating system UICC OS is connected via a physical interface PI to a user equipment. It is today known to produce physical eUICC in factory, where the UICC OS has several Logical Secure element Interfaces, here LSI1, LSI2, LSI3 with as many LSEs. It is here noted that the term "eUICC" refers to any UICC having remote provisioning capabilities.

In practice, an LSE can be either a logical eUICC, thus including a file system, a Network Access Application and remote provisioning capability according to GSMA specifications, or a logical Secure Element SAM SE including a SAM Security Domain (SAM SD) allowing provisioning of Application Providers Security Domains and applications.

In order to perform remote provisioning, as currently defined, some keys are embedded in a logical eUICC Controlling Authority Security Domain eCASD or in a SAM SDKeys as shown on figure 1. The logical eUICC Controlling Authority Security Domain eCASD storing the keys cooperates with an Issuer Security Domain Root ISDR that can be shared between several logical eUICC. This sharing is illustrated by a dashed box on figure 1. The keys are both linked to one specific ecosystem. In the case of eSIM, the ecosystem is managed by GSMA and, in order to enter this ecosystem, the logical eUICC shall be certified according to GSMA specifications. The server entities in charge of remote provisioning, i.e. Subscription Manager Data Preparation (SM-DP+) or SAM Service Manager (SAM SM), shall also be certified in order to obtain cryptographic keys associated to this ecosystem.

The SAM SD or the ISDR have remote provisioning functions, i.e. protocol management and authorizations. Keys as stored in eCASD or SAM SDKeys are used in this process.

Thus, as an illustration, the ISDR enables to create Issuer Security Domain Profiles ISDPs within the logical eUICC. Once the profiles are provisioned, they can be activated or not for the different logical eUICCs. On figure 1, the first profile P1 is active in the logical eUICC at the top of figure 1 while the two others are inactive. The second profile P2 is active in the bottom logical eUICC while the two others are inactive. These features are known. In the SAM structure as defined in standards, all security domains ASP SD of Application Service Provider ASP are contrarily active.

Thus today's remote SIM provisioning implies strong certification in order to be part of the GSMA ecosystem. Certification may be too costly, e.g. for Private Network Provisioning. Besides, belonging to an open ecosystem is unacceptable for security or sovereignty reasons, e.g. for Police or military network provisioning, governmental ID issuance etc.

On a technical point of view, the root keys used to enter a public ecosystem, e.g. GSMA Remote SIM Provisioning, are provisioned during SE issuance in a certified environment and cannot be easily modified.

The use of these keys are submitted to a strong security certification, e.g. Security Accreditation Scheme like SAS-UP or SAS-SM. Same issues are encountered with SAM for the provisioning of the SAM-SD.

In practice, such issues are particularly harmful in the context of the provisioning of small 5G Private Networks. This context implies a provisioning of Network Credentials in an eUICC using GSMA specifications. eUICCs key needs to be loaded in a SAS-UP certified site and signed in order to be recognized in GSMA PKI domain. Also, remote Provisioning can only be done by a certified SM-DP(+) using keys signed in the same GSMA PKI domain. Certification requirements are not acceptable for provisioning a small 5G factory network on the spot, e.g. 5G Alliance for Connected Industries and Automation or multimedia equipment on a movie filming site.

Some issues are also encountered in the context of digital identity provisioning as Digital ID may be released by different entities which may not want to share/trust a common PKI ecosystem. Also a mobile phone may move through different countries which are not sharing a common ecosystem. Sovereign IDs or Corporate IDs are thus problematic to be managed in current system.

Today, to face such issues, the configuration of the different LSEs on a UICC is fixed by design, e.g. two LSEs are logical UICCs with RSP and one is a SAM environment, and the key material is loaded in factory during personalization phase.

However, there exists a need for flexibility post issuance, for example to address the two above mentioned use cases. To illustrate, in order to host a governmental identity application, a given government will mandate to use a SAM SM and key material that are only controlled by this country. So, depending on the country where the mobile phone is delivered or if the mobile phone moves from one country to another, different SAM SD with different key materials will need to be created on the UICC. As exposed above, another use case is the provisioning of a logical eUICC for use in a private network. For the provisioning of few hundred Profiles, a private operator will not be able to sustain the cost of operation of an SM-DP+ in a secure and certified environment. So, it will not be able to get GSMA certification and to enter into the GSMA ecosystem.

One solution could be to create in factory an LSE consisting of a logical UICC with remote provisioning capability using cryptographic keys which does not belong to the GSMA ecosystem but it is not satisfactory as it does not offer any flexibility on field.

Further alternative and advantageous solutions would, accordingly, be desirable in the art.

### SUMMARY OF THE INVENTION

The present invention aims at providing flexibility in the creation of Logical Secure Element once the physical secure element is on the field.

The present invention is defined, in its broadest sense, as a physical secure element installed in a communication device, said physical secure element having an operating system having a supervisor adapted to create various execution environments, said supervisor being further configured to:
- receive, from a specific application enrolment server managing a key ecosystem dedicated to the specific application, a command to create a Logical Secure Element, said command comprising enrolment data comprising at least a type of Logical Secure Element to be created for the specific application and a set of keys to be used for subsequent remote provisioning in relation with the Logical Secure Element to be created,
- create a Logical Secure Element of the type requested in the command as an execution environment onboard the secure element.

The invention proposes to dynamically create the Logical Secure Elements on the physical UICC by performing on-field a pre-personalization suited for the application, i.e. according to the type of LSE, the UICC OS will create an ISDR and an eCASD or a SAM SD and, if necessitated, an embryonal filesystem... The pre-personalized structure is then used to provision the user profile or to download the concerned application as known in the art, for example using the RSP (for "remote SIM provisioning") technology. For the creation of an LSE, the invention provides at least the following information: the type of LSE, e.g. Logical UICC with RSP capability, SAM... and cryptographic key set to be used for remote provisioning. The invention uses the capability of the UICC operating system to create various execution environments.

The invention allows solving the issue of post issuance entrance to a dedicated ecosystem driven by some root key issuer. It also allows expending Private Network and Digital ID support by removing the burden of pre-issuance knowledge of the kind of application and ecosystem to be supported.

According to an advantageous embodiment, to create the Logical Secure Element, the supervisor creates a virtual machine, allocate a memory block and allocate an execution stack.

This embodiment uses abilities of the supervisor in an UICC OS to create various execution environments by creating a dedicated virtual machine and by allocating resources. Advantageously, the execution environment is of the Javacard virtual machine kind.

According to an advantageous feature, the operating system is configured to previously authenticate the enrolment server at the physical secure element.

This feature enables to avoid unwanted LSE creation. Such an authentication may be required by the UICC. In such a case the physical secure element has authentication data, e.g. a certificate or a root public key of an authority, to be used to authenticate at the physical secure element the enrolment server, which has typically a private key signed by the authority

An authentication of the secure element at the enrollment server could be contemplated but would complexify the implementation of the invention in the UICC as unique keys are needed to be deployed in each UICC to authenticate the UICC at the enrolment server. This goes against the simplification offered by the invention but it can answer to requirements of some specific applications.

According to another feature, said physical secure element is preliminary connected to the enrolment server using the communication device.

This enables a direct connection of the enrolment server with the operating system of the secure element.

According to a related embodiment, the command is received via the direct connection of the physical secure element to the enrolment server.

With this embodiment, the transmission of the enrolment data is direct and can be secured via the protection of the connection of the enrolment server and the physical secure element.

According to another embodiment, the physical secure element is advantageously configured to receive the enrolment data via the communication device used to read a code including the enrolment data.

This embodiment enables to provide the enrolment data to be provided offline by scanning a QR code for example with the communication device.

Advantageously, the code is chosen among the following: a QR code, a chain of character.

Using a QR code or a chain of character is a simple way to provide the enrolment data that can be easily used offline.

It is here noted that a same physical secure element of the invention may implement the two above mentioned embodiments for the reception of the enrolment data depending, for example, on the current situation of the communication device in which it is implemented, e.g. online or offline, or on the application for which an LSE is to be created...

According to an advantageous feature, the physical secure element having prestored keys, the command comprises identifiers for the set of keys to be used for remote provisioning, said keys belonging to the prestored keys.

This advantageous feature enables to reduce the quantity of data to be transferred and to protect the value of the keys if no other protection are implemented.

According to an advantageous feature, a property being associated to a profile to be remotely provisioned in a created Logical Secure Element, the supervisor is further configured to check the property before authorizing the start of the remote provisioning of the profile in the created Logical Secure Element.

This feature avoids the created logical secure element to be used for another purpose than the dedicated one. For example, a provisioning of a profile for accessing a public network will not be authorized in a logical secure element created for a private network use. The UICC OS can thus accordingly restrict the use of the newly created LSE to restricted applications, e.g. to a private network. Such a property is, for example, a key type, a specific IMSI... It is here reminded that an IMSI for a private network starts with 999 according to the ITU.

The present invention also relates to a method to create a logical secure element for a specific application within a physical secure element having an operating system having a supervisor adapted to create various execution environments, said method comprising the steps of, for the supervisor:
- receiving, from a specific application enrolment server managing a key ecosystem dedicated to the specific application, a command to create a Logical Secure Element, said command comprising enrolment data comprising at least a type of Logical Secure Element to be created for the specific application and a set of keys to be used for subsequent remote provisioning in relation with the Logical Secure Element to be created,
- create a Logical Secure Element of the type requested in the command as an execution environment onboard the secure element.

The method of the invention gives the ability to dynamically create Logical Secure Elements on a physical secure element on the field when this cannot be done during SE issuance in factory. It is noted here that all features and embodiments as claimed for the physical secure element of the invention also applies to the method of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates the structure of a physical UICC having Logical Secure Element;
- Figure 2 shows a flowchart of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 2 schematically shows a method of the invention. The method necessitates the implication of an Enrolment Server ES managing a private and/or dedicated ecosystem materialized by a cryptographic infrastructure, e.g. PKI or private key scheme, or in relation with a specific application for which a Logical Secure Element is needed onboard of a physical secure element installed in a user equipment UE of a user.

The enrolment server can be a single computer for small private deployment or a nationwide server for governmental application with all intermediary situations.

In a first step S1, a user equipment UE is used by the user to confirm his/her consent at an enrolment server ES. Once the consent is checked, a connection to the enrolment server ES is established. A physical secure element having an operating system UICC OS having a supervisor adapted to create various execution environments of the invention is installed in the user equipment.

In an optional step S1', a certificate based secure channel is established between the operating system UICC OS of the physical secure element and the enrolment server after authentication of the server. Typically, such an authentication step implicates the use of a cryptographic public key provided in the secure element by the secure element issuer in factory. The associated private cryptographic key needs to be also known by the enrolment server. The authentication step may also implicate the use of a PIN or a passphrase provided by the end user.

In a step S2, enrolment data are sent by the enrolment server ES to the UICC OS. Said enrolment data comprise an LSE type and keys to be used subsequently for the remote provisioning of the profiles in case of a logical eUICC type LSE and of the application in case of a SAM type LSE. Enrolment data may further comprise identification metadata.

The message containing the information required for the LSE creation, comprising type of LSE, keys and, optionally, authentication can be provided using an enrolment code similar to the activation code used for RSP. This enrolment code can be transferred to the device hosting the UICC by using a QR code, NFC, SMS... The Enrolment can be done online or offline. In offline mode, the Enrolment server can generate a QR code for example.

Thus, various embodiment can be implemented to provide the enrolment data. They can be sent using a direct connection of the UICC OS to the enrolment server ES, i.e. an online provision. A chain of characters adapted to be interpreted by the UICC OS provided to the user equipment can also be used, even if the communication device is offline. A QR code scanned using the user equipment can also be used even if the communication device is offline.

Advantageously the chain of characters or the QR code are signed using a private key by the enrolment server. A signature of the enrolment server is thus advantageously inserted in the enrolment data. The UICC OS will thus be able to check the authenticity of the enrolment data before using them to create the Logical Secure Element.

Upon reception of the enrolment code, the UICC has all the information required in order to create the new LSE. After the LSE creation, remote provisioning can be done using the credentials supplied in the enrolment code.

Keys can be inserted in the enrolment data themselves. In another embodiment, in the case where keys were pre-stored in factory in the physical secure element, only a reference to keys prestored in the UICC can be sent instead of the keys themselves. This embodiment uses existing provisioning specifications with keys previously provisioned. Indeed, optionally, the invention can use root keys pre-provisioned by different players which generate root keys, public part of these keys being pre-provisioned in the UICC. The invention can thus re-use existing WEB well known root keys as the one known by browsers. These keys may also be used in order to authenticate the enrolment server.

This last embodiment, where references to pre-stored keys are used, reduces the quantity of data to be transmitted in the enrolment data and reduce the risk for the keys to be discovered by malicious persons. It is here noted that previously existing solutions to protect sensitive data to be transmitted can be implemented in combination with the invention.

Once enrolment data are received, the operating system UICC OS creates, in a step S3, a Logical Secure Element LSE of the type stipulated in the enrolment data, i.e logical eUICC, SAM...

Then, in a subsequent step S4, a remote provisioning process is launched using keys previously enrolled with a subscription manager SM-DP+ to prepare provisioning data and provide them. The invention thus provisions specific PKI infrastructures by creating a new LSE in logical eUICCs, the LSE type depending on application and intended provisioning requirements, e.g. SGP.02, SGP.22, SAM...

This invention solves the issue of post issuance of an LSE allowing remote provisioning when the remote provisioning environment cannot be setup during physical UICC manufacturing. The use cases of provisioning digital identity applications or applications in a private network are specifically addressed.

The invention is specifically adapted to the provisioning of digital Identity applications in a new country which wants to keep its sovereignty for such a process. It is applicable also for private identity, i.e. corporate. More specifically, the European Union Agency for Cybersecurity (ENISA) is currently defining the support of European Unique Identifier (EUID) using an eSIM together with SAM.

The invention also advantageously addresses the provisioning of USIM applications for private networks in the following cases:
- The private network operator is too small to be able to afford the complexity of GSMA certified environment or a certified environment is not required.
- The private network is setup for police or military use.

The invention enables to modify the number of LSEs managed on a UICC during its life time. The new functionality of the invention allows new use cases for the concerned secure element. New feature implies external exchange and end user implication.

The UICC OS may also implement some security mechanisms in order to avoid miss use of the invention. For example, a created logical eUICC shall be able to receive a Profile referring to a private network and will reject a Profile used for the connection to a public network.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Physical secure element installed in a communication device, said physical secure element having an operating system having a supervisor adapted to create various execution environments, said supervisor being further configured to:
- receive, from a specific application enrolment server managing a key ecosystem dedicated to the specific application, a command to create a Logical Secure Element, said command comprising enrolment data comprising at least a type of Logical Secure Element to be created for the specific application and a set of keys to be used for subsequent remote provisioning in relation with the Logical Secure Element to be created,
- create a Logical Secure Element of the type requested in the command as an execution environment onboard the secure element.

2. Physical secure element according to claim 1, wherein, to create the Logical Secure Element, the supervisor creates a virtual machine, allocate a memory block and allocate an execution stack.

3. Physical secure element according to one of previous claims, wherein the execution environment is of the Javacard virtual machine kind.

4. Physical secure element according to one of previous claims, wherein the operating system is configured to previously authenticate the enrolment server at the secure element.

5. Physical secure element according to one of previous claims, wherein said physical secure element is preliminary connected to the enrolment server using the communication device.

6. Physical secure element according to claim 5, configured to received the command via the direct connection of the physical secure element to the enrolment server.

7. Physical secure element according to one of previous claims, configured to receive the enrolment data via the communication device used to read a code including the enrolment data.

8. Physical secure element according to claim 7, wherein the code is chosen among the following: a QR code, a chain of character.

9. Physical secure element according to one of preceding claims, wherein, said physical secure element having prestored keys, the command comprises identifiers for the set of keys to be used for remote provisioning, said keys belonging to the prestored keys.

10. Physical secure element according to one of preceding claims, wherein, a property being associated to a profile to be remotely provisioned in a created Logical Secure Element, the supervisor is further configured to check the property before authorizing the start of the remote provisioning of the profile in the created Logical Secure Element.

11. Method to create a logical secure element for a specific application within a physical secure element having an operating system having a supervisor adapted to create various execution environments, said method comprising the steps of, for the supervisor:
- receiving, from a specific application enrolment server managing a key ecosystem dedicated to the specific application, a command to create a Logical Secure Element, said command comprising enrolment data comprising at least a type of Logical Secure Element to be created for the specific application and a set of keys to be used for subsequent remote provisioning in relation with the Logical Secure Element to be created,
- create a Logical Secure Element of the type requested in the command as an execution environment onboard the secure element.

12. Method according to claim 11, wherein, the Logical Secure Element creation step comprises the creation of a virtual machine, the allocation of a memory block and the allocation of an execution stack.

13. Method according to one of claims 11 and 12, wherein the operating system is configured to previously authenticate the enrolment server at the secure element.

14. Method according to one of claims 11 to 13, wherein the step of reception of the enrolment data is performed using a direct connection, preliminary settled using the communication device, between the physical secure element and the enrolment server or via the communication device used to read a code including the enrolment data.

15. Method according to one of claims 11 to 14, wherein, the physical secure element having prestored keys, the received command comprises identifiers for the set of keys to be used for remote provisioning, said keys belonging to the prestored keys.

16. Method according to one of claims 11 to 15, a tag being associated to a profile to be remotely provisioned in a created Logical Secure Element, the method further comprises a step of checking the tag before authorizing the start of the remote provisioning of the profile in the created Logical Secure Element.
